# EUROPÄISCHE PATENTSCHRIFT

(11) **EP 1 928 947 B1**
(45) Veröffentlichungstag und Bekanntmachung des Hinweises auf die Patenterteilung: **03.06.2009**
(21) Anmeldenummer: 06793076.8
(22) Anmeldetag: 30.08.2006
(51) Int. Cl.: C08K 5/5398, B60C 1/00

(54) **KAUTSCHUKMISCHUNG UND REIFEN**
RUBBER MIXTURE AND TIRES
MELANGE A BASE DE CAOUTCHOUC ET PNEU

(30) Priorität: 21.09.2005 DE 102005044997
(43) Veröffentlichungstag der Anmeldung: 11.06.2008
(73) Patentinhaber: Continental Aktiengesellschaft, D-30165 Hannover (DE)
(72) Erfinder: MERGELL, Boris, 30890 Barsinghausen (DE); RECKER, Carla, 30167 Hannover (DE)
(74) Vertreter: Finger, Karsten
(86) Internationale Anmeldenummer: PCT/EP2006/065799
(87) Internationale Veröffentlichungsnummer: WO 2007/033889

(56) Entgegenhaltungen:
- EP-A- 1 514 901
- EP-A- 1 561 780
- EP-A2- 0 896 888
- EP-A2- 1 277 795
- US-A1- 2001 000 516
- US-B1- 6 197 868

## Beschreibung

Die Erfindung betrifft eine schwefelvernetzbare Kautschukmischung, die zumindest einen Dienkautschuk, zumindest einen Beschleuniger und ein flüssiges Polymer enthält. Ferner betrifft die Erfindung Reifen, insbesondere Fahrzeugluftreifen, deren Laufstreifen zumindest zum Teil auf der mit Schwefel vulkanisierten Kautschukmischung basieren.

Zur Beeinflussung der Mischungs- und Vulkanisateigenschaften werden den Mischungen unterschiedlichste Zuschlagstoffe beigemischt und/oder es werden spezielle Polymere verwendet. Als Zuschlagstoffe seien beispielhaft an dieser Stelle Füllstoffe (z. B. Ruß), Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf den Rollwiderstand und das Handling sowie im Hinblick auf den Nassgriff und den Rollwiderstand. Man ist daher bestrebt, durch Variation der Mischungszusammensetzung diese Zielkonflikte zu lösen und ein verbessertes Niveau der sich üblicherweise konträr verhaltenden Eigenschaften zu erzielen.

Eine wichtige Zuschlagstoffgruppe, die auf die Vulkanisationsgeschwindigkeit und die physikalischen Eigenschaften der Vulkanisate Einfluss hat, ist die Gruppe der Vulkanisationsbeschleuniger. Für die Vulkanisation von schwefelvernetzbaren Kautschukmischungen werden vornehmlich folgende Vulkanisationsbeschleunigergruppen ausgewählt: Mercapto-Beschleuniger (z. B. 2-Mercaptobenzothiazol), Sulfenamid-Beschleuniger (z. B. Benzothiazyl-2-cyclohexylsulfenamid (CBS)), Thiuram-Beschleuniger (z. B. Tetramethylthiuramdisulfid (TMTD)), Dithiocarbamat-Beschleuniger (z. B. Zinkdibenzyldithiocarbamat) und Guanidin-Beschleuniger (z. B. N,N'-Diphenylguanidin (DPG)). Die Beschleuniger können auch in Kombination miteinander eingesetzt werden, wobei sich synergistische Effekte ergeben können.
Ferner ist für die Vulkanisation von Ethylen-Propylen-Dien-Copolymeren (EPDM) der Einsatz von Dithiophosphat-Beschleunigern (z. B. Zinkdibutyldithiophosphat (ZDBP)) üblich. Bei Dienkautschukmischungen werden Dithiophosphat-Beschleuniger in Kombination mit Mercapto- und/oder Sulfenamid-Beschleunigern eingesetzt.
In der EP 0 767 205 A1 werden Metallalkyldithiophosphate in Kombination mit Dithiophosphorsäurepolysulfiden auch für die Beschleunigung von schwefelvernetzbaren Naturkautschukmischungen mit verringerter Reversionsneigung vorgeschlagen.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf.
In der EP 1 505 115 A1 wird die Verwendung von 0,05 bis 5 phr eines Zinkoxids mit einem Partikeldurchmesser von weniger als 20 nm in schwefelvernetzbaren Dienkautschukmischungen beschrieben. Das spezielle Zinkoxid soll eine Reduktion des Zinkoxidanteils in der Mischung ohne Nachteile im Vulkanisationsprozess ermöglichen. Die Reduktion des Zinkoxids ist aus Umweltgesichtspunkten wünschenswert. Als bevorzugte Beschleuniger-Kombination in Mischungen mit dem Zinkoxid mit einem Partikeldurchmesser von weniger als 20 nm wird in der EP 1 505 115 A1 die Kombination eines Sulfenamid-Beschleunigers als Erstbeschleuniger mit einem Zweitbeschleuniger, ausgewählt aus Guanidin-Beschleunigein, Dithiocarbamat-Beschleunigern und Thiuram-Beschleunigern, vorgeschlagen.

Auch durch den Einsatz flüssiger Polymere, insbesondere flüssiger Dienpolymere wie flüssige Kautschuke, kann Einfluss auf die Eigenschaften von Vulkanisaten genommen werden. So sind z. B. aus der EP-A-1 052 270 Laufstreifenmischungen bekannt, die für einen guten Griff auf Eis unter anderem ein flüssiges Polymer, z. B. Polybutadien, enthalten. Aus der DE 38 04 908 A1 sind ebenfalls Laufstreifenmischungen bekannt, die für gute Wintereigenschaften flüssiges Polybutadien enthalten. Flüssiges Polybutadien mit hohem Vinylgehalt wird auch in der EP-A-1 035 164 für Reifenlaufstreifen als Ersatz für herkömmliche Weichmacheröle vorgeschlagen. Die EP-A-1529806 offenbart Kautschukmischungen, die für gutes Abriebverhalten, guten Nassgriff und eine gute Traktion auf Eis und Schnee bei gleichzeitig gutem Trockenbremsen einen Dienkautschuk, flüssiges Polybutadien mit einem Molekulargewicht von 1500 - 10000 g/mol und einem Vinylgehalt von 15 - 50 %, einen polaren Füllstoff, einen Hochstrukturruß und ein Glycerid und/oder ein Faktis enthält.

Der vorliegenden Erfindung liegt die Aufgabe zu Grunde, Kautschukmischungen, insbesondere für die Laufstreifen von Fahrzeugreifen, bereitzustellen, deren Vulkanisate sich durch eine erhöhte Härte bei gleichzeitig erhöhtem Verlustfaktor tan δ bei 0 °C und verringertem Verlustfaktor tan δ bei 60 °C auszeichnen.

Die Härte bei Raumtemperatur wird in der Reifenindustrie bei Reifenlaufstreifenmischungen als Maß für das Handling angesehen, eine höhere Härte geht mit einem verbesserten Handling einher. Der Verlustfaktor tan δ bei 0 °C gilt als Maß für das Nassbremsen, wobei ein hoher Verlustfaktor tan δ bei 0 °C in einem verbesserten Nassbremsen resultiert. Der Verlustfaktor tan δ bei 60 °C gilt hingegen als Maß für den

Rollwiderstand. Eine Verringerung des Verlustfaktors tan δ bei 60 °C resultiert in einer Verbesserung (Verringerung) des Rollwiderstandes.

Wird die Kautschukmischung mit den vorgenannten Eigenschaften für den Laufstreifen eines Fahrzeugluftreifens verwendet, so bewirkt die höhere Härte ein verbessertes Handlingverhalten, während gleichzeitig der Nassgriff verbessert und der Rollwiderstand reduziert wird.

Gelöst wird diese Aufgabe erfindungsgemäß dadurch, dass die Kautschukmischung
- zumindest einen Dienkautschuk,
- 0,1 - 10 phr zumindest eines Dithiophosphat-Beschleunigers und
- 1 - 80 phr zumindest eines flüssigen Polymers enthält.

Die in dieser Schrift verwendete Angabe phr (parts per hundred parts of rubber by weight) ist dabei die in der Kautschukindustrie übliche Mengenangabe für Mischungsrezepturen.

Die Dosierung der Gewichtsteile der einzelnen Substanzen wird dabei stets auf 100 Gewichtsteile der gesamten Masse aller in der Mischung vorhandenen (plastischen) Kautschuke bezogen. Die in der Mischung enthaltenen flüssigen Polymere werden bei den Dosierungsrezepturen nicht zu den Kautschuken gezählt und ihre Dosierung bezieht sich ebenfalls auf die Anteile an Festkautschuken in der Mischung.

Überraschenderweise wurde gefunden, dass durch die spezielle Kombination von 0,1 - 10 phr zumindest eines Dithiophosphat-Beschleunigers mit 1 - 80 phr eines flüssigen Polymers in schwefelvernetzbaren Kautschukmischungen, die zumindest einen Dienkautschuk enthalten, die Härte erhöht und der Verlustfaktor tan δ bei 60 °C verringert werden kann und gleichzeitig der Verlustfaktor tan δ bei 0°C erhöht wird. Dithiophosphat-Beschleuniger als löslicher Beschleuniger und flüssiges Polymer scheinen so in Wechselwirkung zu treten, dass sich eine homogenere räumliche Netzknotenverteilung ergibt.
Bei Fahrzeugreifen mit den erfindungsgemäßen Mischungen als Laufstreifen, können die sich sonst gegensätzlich verhaltenden Eigenschaften Handling und Rollwiderstand sowie Handling und Nassgriff voneinander entkoppelt werden.

Die erfindungsgemäßen Kautschukmischungen weisen zusätzlich den Vorteil auf, dass sie stark verkürzte Heizzeiten zeigen.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR), Styrol-Butadien-Copolymer (SBR) und Acrylnitril-Butadien-Kautschuk (NBR). Diese Dienelastomere lassen sich gut zu der eifindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Cis-1,4-Polybutadien mit einem cis-1,4-Anteil größer 90 Gew.-% kann z. B. durch Lösungspolymerisation in Anwesenheit von Katalysatoren vom Typ der seltenen Erden hergestellt werden.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die erfindungsgemäße Kautschukmischung enthält 0,1 - 10 phr, bevorzugt 0,5 - 7 phr, besonders bevorzugt 1 - 5 phr, zumindest eines Dithiophosphat-Beschleunigers. Es können auch mehrere Dithiophosphat-Beschleuniger in der Mischung eingesetzt werden.

Als Dithiophosphat-Beschleuniger kann z. B. Dodecylammonium-diisooctyldithiophosphat eingesetzt werden. Bevotzugt finden allerdings Metallalkyldithiophosphate Einsatz. Als besonders effektiv im Hinblick auf die verbesserten Vulkanisateigenschaften haben sich Zink-alkyldithiophosphate, z. B. Zink-dibutyldithiophosphat, Zink-isobutyl-isooctyldithiophosphat und Zink-diisooctyldithiophosphat, erwiesen.

Die erfindungsgemäße Mischung enthält außerdem 1 - 80 phr, bevorzugt 15 - 60 phr, zumindest eines flüssigen Polymers. Bei dem oder den flüssigen Polymer(en) kann es sich um unterschiedliche flüssige Polymertypen, beispielsweise flüssiges Polybutadien mit einem Molekulargewicht von 1500 - 10000 g/mol, handeln. Vorzugsweise wird als flüssiges Polymer jedoch im Hinblick auf die Verbesserung der Vulkanisateigenschaften ein solches ausgewählt, welches als zumindest ein Monomer ein Dien enthält. Bevorzugt wird ein Butadien-Styrol-Random-Copolymer einsetzt. Es kann z. B. ein Butadien-Styrol-Random-Copolymer mit einem Molekulargewicht von 4500 g/mol, welches unter dem Namen Ricon^{®} 100 von der Firma Sartomer, USA erhältlich ist, verwendet werden.

Gemäß einer vorteilhaften Weiterbildung der Erfindung enthält die erfindungsgemäße Mischung außerdem 0,1 - 10 phr, bevorzugt 0,3 - 7 phr, besonders bevorzugt 1 - 5 phr, Zinkoxid mit einer BET-Oberfläche von 20 bis 60 m²/g. Es handelt sich dabei um hochaktives Zinkoxid mit - im Vergleich zu herkömmlichem Zinkoxid - hoher Oberfläche. Es kann z. B. so genanntes nano-Zinkoxid des Typs FX-1 der Firma Shanxi, China verwendet werden. Das Zinkoxid kann auch auf einen anderen mineralischen Träger, wie z. B. CaCO₃, aufgebracht und in dieser Form für die Mischung verwendet werden.

Die Kautschukmischung kann als Füllstoff zumindest Ruß und/oder Kieselsäure enthalten. Die verwendbaren Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierbare Kieselsäuren, so genannte HD-Kieselsäuren (z. B. Ultrasil 7000 der Firma Degussa), zum Einsatz kommen. Auch so genannte HDRS-Typen (high dispersible reactive silica) können verwendet werden.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelätomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Es können als Silan.Kupplungsagenzien auch geblockte Mercaptosilane zum Einsatz kommen. ,

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuk(e) erfolgen kann.

Die Kautschukmischung kann außerdem noch andere Füllstoffe, wie beispielsweise Alumosilicate, Aluminiumhydroxid, Schichtsilikate, Kreide, Stärke, Magnesiumoxid, Titandioxid, Kautschukgele usw. in beliebigen Kombinationen enthalten.

Die Kautschukmischung kann außer den genannten Substanzen noch andere Zusatzstoffe, wie z. B. Weichmacher (z. B. aromatische, naphthenische oder paraffinische

Mineralölweichmacher, MES (mild extraction solvate), TDAE (treated distillate aromatic extract), RAE (residual aromatic extract) oder Rapsöl) aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden zusammen mit den Beschleunigern im letzten Mischungsschritt in den vom Fachmann gebräuchlichen Mengen (0,4 bis 6 phr, Schwefel bevorzugt in Mengen von 1,5 bis 2,5 phr) der Kautschukmischung zugesetzt.

Gemäß einer bevorzugten Weiterbildung der Erfindung enthält die Kautschukmischung für ausreichende Verarbeitungssicherheit und eine Vulkanisation mit geringer Reversionsneigung neben zumindest einem Dithiophosphat-Beschleuniger zumindest einen weiteren Vulkanisationsbeschleuniger ausgewählt aus der Gruppe, bestehend aus Mercapto-Beschleunigern (z. B. 2-Mercaptobenzothiazol), Sulfenamid-Beschleunigern (z. B. Benzothiazyl-2-cyclohexylsulfenamid (CBS)), Thiuram-Beschleunigern (z. B. Tetramethylthiuramdisulfid (TMTD), Dithiocarbamat-Beschleunigern (z. B. Zinkdibenzyldithiocarbamat) und Guanidin-Beschleunigern (z. B. N,N'-Diphenylguanidin (DPG)). Der oder die weiteren Vulkanisationsbeschleuniger werden vorzugsweise in Mengen von 0,5 bis 7 phr eingesetzt.

Wird der Dithiophosphat-Beschleuniger in Kombination mit anderen Beschleunigern eingesetzt, so kann im Vergleich zur üblichen Kautschukmischung ohne Dithiophosphat-Beschleuniger der herkömmliche Beschleuniger molar ausgetauscht werden. Es werden dann bevorzugt 25 bis 75 mol-% des herkömmlichen Beschleunigers durch den Dithiophosphat-Beschleuniger ausgetauscht.

Die Kautschukmischung kann auch übliche Vulkanisationsverzögerer in üblichen Mengen enthalten.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel, ggf. Schwefelspender, Beschleuniger und ggf. Verzögerer) enthält, in einer oder mehreren Mischstufe(n) hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht.
Die Kautschukmischung kann z. B. für verschiedene Reifenbauteile, beispielsweise als Mischung im Kern- und/oder Gürtelbereich oder als mondsichelförmige Notlaufeinlage im Seitenwandbereich eingesetzt werden. Bevorzugt wird die Mischung jedoch als Laufstreifen eingesetzt und zu diesem Zweck in die Form eines Laufstreifens gebracht. Ein so erzeugter Laufstreifenmischungsrohling wird bei der Herstellung des Reifenrohlings, insbesondere des Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Nach der Vulkanisation weisen die Vulkanisate eine hohe Härte, einen erhöhten

Verlustfaktor tan δ bei 0 °C und einen verringerten Verlustfaktor tan δ bei 60 °C auf. Fahrzeugluftreifen mit einem Laufstreifen aus einer solchen Mischung weisen gutes Handling bei gutem Nassgriff und verringertem Rollwiderstand auf.

Die Erfindung soll nun anhand von Vergleichs- und Ausführungsbeispielen, die in den Tabellen 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäße Mischung ist mit E gekennzeichnet. Mischung 2(V) enthält flüssiges Butadien-Styrol-Random-Copolymer, Mischung 3(V) enthält Zinkoxid mit einer BET-Oberfläche von 44 m²/g, Mischung 4(V) enthält Zinkoxid mit einer BET-Oberfläche von 44 m²/g und Zink-dialkyldithiophosphat und Mischung 5(E) enthält flüssiges Butadien-Styrol-Random-Copolymer, Zinkoxid mit einer BET-Oberfläche von 44 m²/g und Zink-dialkyldithiophosphat.

Die Mischungsherstellung erfolgte unter üblichen Bedingungen in zwei Stufen in einem Labortangentialmischer. Es wurden die Umsatzzeiten bis zum Erreichen der relativen Vernetzungsgrade von 5 und 90 % (t₅, t₉₀) über ein rotorloses Vulkameter (MDR = Moving Disc Rheometer) gemäß DIN 53 529 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
• Shore-A-Härte bei Raumtemperatur und 70 °C gemäß DIN 53 505
• Zugfestigkeit bei Raumtemperatur gemäß DIN 53 504
• Reißdehnung bei Raumtemperatur gemäß DIN 53 504
• Spannungswerte bei 50, 100, 200 und 300 % Dehnung bei Raumtemperatur gemäß DIN 53 504
• Bruchenergiedichte bestimmt im Zugversuch nach DIN 53 504, wobei die Bruchenergiedichte die bis zum Bruch erforderliche Arbeit, bezogen auf das Volumen der Probe, ist
• Verlustfaktor tan δ bei 0 und 60 °C gemäß DIN 53 513 aus Messung mit konstanter Verformungsamplitude von 0,2 % bei 10 % Vorverformung in Kompression mit 10 Hz dynamischer Verformungsfrequenz

**Tabelle 1**

| Bestandteile | Einheit | 1 (V) | 2(V) | 3(V) | 4(V) | 5(E) |
|---|---|---|---|---|---|---|
| Naturkautschuk | phr | 20 | 20 | 20 | 20 | 20 |
| BR^{a} | phr | 37,6 | 26,67 | 37,6 | 37,6 | 26,67 |
| S-SBR^{b} | phr | 42,4 | 53,33 | 42,4 | 42,4 | 53,33 |
| flüssiges Butadien-Styrol-Random-Copolymer^{c} | phr | - | 26,67 | - | - | 26,67 |
| Kieselsäure^{d} | phr | 95 | 95 | 95 | 95 | 95 |
| Weichmacheröl | phr | 45 | 18,33 | 45 | 45 | 18,33 |
| Alterungsschutzmittel | phr | 4 | 4 | 4 | 4 | 4 |
| Ozonschutzwachs | phr | 2 | 2 | 2 | 2 | 2 |
| Zinkoxid A^{e} | phr | 2,5 | 2,5 | - | - | - |
| Zinkoxid B^{f} | phr | - | - | 1 | 1 | 1 |
| Stearinsäure | phr | 2,5 | 2,5 | 2,5 | 2,5 | 2,5 |
| Silan-Kupplungsagens^{g} | phr | 6,65 | 6,65 | 6,65 | 6,65 | 6,65 |
| DPG | phr | 2 | 2 | 2 | 2 | 2 |
| CBS | phr | 1,6 | 2,03 | 1,6 | 0,8 | 1,015 |
| Zink-dialkyldithiophosphat^{h} | phr | - | - | - | 4,22 | 5,354 |
| Schwefel | phr | 2 | 2,53 | 2 | 2 | 2,53 |

| Eigenschaften | | | | | | |
|---|---|---|---|---|---|---|
| t₅ | min | 0,44 | 0,52 | 0,42 | 0,43 | 0,44 |
| t₉₀ | min | 18,57 | 17,4 | 9,84 | 2,45 | 2,69 |
| Härte bei RT | Shore A | 62,7 | 63 | 61,8 | 66,6 | 67,5 |
| Härte bei 70 °C | Shore A | 58,2 | 59,2 | 57,5 | 64 | 64,8 |
| Zugfestigkeit bei RT | MPa | 14,7 | 14,5 | 14,8 | 15,8 | 14,3 |
| Reißdehnung bei RT | % | 640 | 598 | 672 | 549 | 455 |
| Spannungswert 50 % | MPa | 0,97 | 1,04 | 0,95 | 1,25 | 1,34 |
| Spannungswert 100 % | MPa | 1,59 | 1,77 | 1,61 | 2,2 | 2,45 |
| Spannungswert 200 % | MPa | 3,42 | 3,83 | 3,54 | 4,71 | 5,43 |
| Spannungswert 300 % | MPa | 5,8 | 6,37 | 5,84 | 8,03 | 9,35 |
| Bruchenergiedichte | J/cm³ | 37,2 | 34,9 | 40,1 | 35,5 | 26,9 |
| tan δ 0°C | - | 0,316 | 0,423 | 0,310 | 0,277 | 0,414 |
| tan δ 60 °C | - | 0,154 | 0,165 | 0,151 | 0,129 | 0,144 |
| (tan δ 0 °C - tan δ 60 °C) | - | 0,162 | 0,257 | 0,159 | 0,149 | 0,270 |

| | | | | | | |
|---|---|---|---|---|---|---|
| ^{a} High-cis Polybutadien ^{b} lösungspolymerisiertes Styrol-Butadien-Copolymer, Styrolgehalt: 21 Gew.-%, Vinylanteil 61 %, endgruppenmodifiziert und zinngekoppelt ^{c} flüssiges Butadien-Styrol-Random-Copolymer, Mₙ = 4500 g/mol, Ricon^{®} 100, Firma Sartomer, USA ^{d} Ultrasil^{®} VN3, Firma Degussa, Deutschland ^{e} Zinkoxid mit einer BET-Oberfläche von 4-8 m²/g, nach dem indirekten Verfahren hergestelltes Zinkoxid ^{f} Zinkoxid mit einer BET-Oberfläche von 44 m²/g, Typ FX-1, Firma Shanxi, China ^{g} Silquest^{®} A-1589, Firma OSi, USA ^{h} Zink-diisooctyldithiophosphat, Rhenogran^{®} ZDT-50 mit Polymerbinder EPDM/EVA, Einsatzstoffgehalt 50 %, Firma Rheinchemie, Deutschland | | | | | | |

Aus der Tabelle 1 wird ersichtlich, dass die Zugabe von flüssigem Polymer gemäß Mischung 2(V) zu gleich bleibender Härte bei erhöhten Verlustfaktoren tan δ bei 0 °C und bei 60 °C führt. Das Handling bleibt bei Reifen mit Laufstreifen aus einer solchen Mischung auf gleichem Niveau, der Rollwiderstand wird verschlechter.

Der alleinige Austausch von herkömmlichem Zinkoxid A (Mischung 1(V)) durch ein Zinkoxid B mit einer BET-Oberfläche von 44 m²/g (Mischung 3(V)) hat kaum Einfluss auf die physikalischen Kenngrößen der Vulkanisate. Einzig die Umsatzzeit bis zum Erreichen des relativen Vernetzungsgrades von 90 % t₉₀ ist reduziert.

Der teilweise Austausch des Beschleunigers CBS durch Zink-dialkyldithiophosphat als Beschleuniger gemäß Mischung 4(V) resultiert bei den Mischungsvulkanisaten bei deutlich verkürzter Vulkanisationszeit in einer höheren Härte, einem deutlich erniedrigten Verlustfaktor tan δ bei 0 °C und einem erniedrigten Verlustfaktor tan δ bei 60 °C. Bei Verwendung einer solchen Mischung für Reifenlaufstreifen würden diese Eigenschaftsveränderungen den Zielkonflikt zwischen Nassgriff und Rollwiderstand jedoch vergrößern, da die Differenz zwischen Verlustfaktor tan δ bei 0 °C und

Verlustfaktor tan δ bei 60 °C im Vergleich zur Mischung 1(V) verkleinert wird.

Erst die spezielle Kombination von Zink-dialkyldithiophosphat mit einem flüssigen Polymer und mit Zinkoxid mit einer BET-Oberfläche von 44 m²/g (Mischung 5(E)) führt zu einer noch höheren Härte der Mischungsvulkanisate bei gleichzeitig erhöhtem Verlustfaktor tan δ bei 0 °C und reduziertem Verlustfaktor tan δ bei 60 °C. Die Differenz zwischen Verlustfaktor tan δ bei 0 °C und Verlustfaktor tan δ bei 60 °C ist groß. Dies bedeutet, dass bei einem Reifen mit einer solchen Mischung als Laufstreifen sowohl das Handling als auch der Nassgriff und der Rollwiderstand verbessert werden. Im Vergleich zu den Einzelmaßnahmen gemäß den Mischungen 2(V), 3(V) und 4(V) kann sowohl der Konflikt zwischen Handling und Rollwiderstand als auch zwischen Nassgriff und Rollwiderstand gelöst werden. Zusätzlich erlaubt die kurze Umsatzzeit bis zum Erreichen des relativen Vernetzungsgrades von 90 % t₉₀ noch kürzere Heizzeiten.

## Patentansprüche

1. Schwefelvernetzbare Kautschukmischung, enthaltend
- zumindest einen Dienkautschuk,
- 0,1 - 10 phr (Gewichtsteile bezogen auf 100 Gewichtsteile Kautschuk) zumindest eines Dithiophosphat-Beschleunigers und
- 1 - 80 phr zumindest eines flüssigen Polymers.

2. Kautschukmischung nach Anspruch 1, **dadurch gekennzeichnet, dass** sie 0,5 - 7 phr, vorzugsweise 1 bis 5 phr, zumindest eines Dithiophosphat-Beschleunigers enthält.

3. Kautschukmischung nach Anspruch 1 oder 2, **dadurch gekennzeichnet, dass** der Dithiophosphat-Beschleuniger ein Metallalkyldithiophosphat ist.

4. Kautschukmischung nach Anspruch 3, **dadurch gekennzeichnet, dass** der Dithiophosphat-Beschleuniger ein Zinkalkyldithiophosphat ist.

5. Kautschukmischung nach zumindest einem der vorhergehenden Ansprüche, **dadurch gekennzeichnet, dass** sie 15 - 60 phr zumindest eines flüssigen Polymers enthält.

6. Kautschukmischung nach zumindest einem der vorhergehenden Ansprüche, **dadurch gekennzeichnet, dass** das flüssige Polymer als zumindest ein Monomer ein Dien enthält.

7. Kautschukmischung nach Anspruch 6, **dadurch gekennzeichnet, dass** das flüssige Polymer ein Butadien-Styrol-Random-Copolymer ist.

8. Kautschukmischung nach zumindest einem der vorhergehenden Ansprüche, **dadurch gekennzeichnet, dass** sie 0,1 - 10 phr Zinkoxid mit einer BET-Oberfläche von 20 bis 60 m²/g enthält.

9. Kautschukmischung nach zumindest einem der vorhergehenden Ansprüche, **dadurch gekennzeichnet, dass** sie neben zumindest einem Dithiophosphat-Beschleuniger zumindest einen weiteren Vulkanisationsbeschleuniger ausgewählt aus der Gruppe, bestehend aus Mercapto-Beschleunigern, Sulfenamid-Beschleunigern, Thiuram-Beschleunigern, Dithiocarbamat-Beschleunigern und Guanidin-Beschleunigern, enthält.

10. Kautschukmischung nach Anspruch 9, **dadurch gekennzeichnet, dass** sie 0,5 bis 7 phr des bzw. der weitere(n) Vulkanisationsbeschleuniger(s) enthält.

11. Reifen, insbesondere Fahrzeugluftreifen, dessen Laufstreifen zumindest zum Teil auf einer mit Schwefel vulkanisierten Kautschukmischung nach einem der Ansprüche 1 bis 10 basiert.

## Claims

1. Sulphur-crosslinkable rubber mixture, containing
- at least one diene rubber,
- 0.1 - 10 phr (parts by weight based on 100 parts by weight of rubber) of at least one dithiophosphate accelerator and
- 1 - 80 phr of at least one liquid polymer.

2. Rubber mixture according to Claim 1, **characterized in that** it contains 0.5 - 7 phr, preferably 1 to 5 phr, of at least one dithiophosphate accelerator.

3. Rubber mixture according to Claim 1 or 2, **characterized in that** the dithiophosphate accelerator is a metal alkyl dithiophosphate.

4. Rubber mixture according to Claim 3, **characterized in that** the dithiophosphate accelerator is a zinc alkyl dithiophosphate.

5. Rubber mixture according to at least one of the preceding claims, **characterized in that** it contains 15 - 60 phr of at least one liquid polymer.

6. Rubber mixture according to at least one of the preceding claims, **characterized in that** the liquid polymer contains a diene as at least one monomer.

7. Rubber mixture according to Claim 6, **characterized in that** the liquid polymer is a butadiene-styrene random copolymer.

8. Rubber mixture according to at least one of the preceding claims, **characterized in that** it contains 0.1-10 phr of zinc oxide having a BET surface area of 20 to 60 m²/g.

9. Rubber mixture according to at least one of the preceding claims, **characterized in that,** in addition to at least one dithiophosphate accelerator, it contains at least one further vulcanization accelerator selected from the group consisting of mercapto accelerators, sulphenamide accelerators, thiuram accelerators, dithiocarbamate accelerators and guanidine accelerators.

10. Rubber mixture according to Claim 9, **characterized in that** it contains 0.5 to 7 phr of the further vulcanization accelerator(s).

11. Tyre, in particular pneumatic vehicle tyre, the tread of which is based at least partly on a sulphur-vulcanized rubber mixture according to any of Claims 1 to 10.

## Revendications

1. Mélange de caoutchouc réticulable au soufre, contenant
- au moins un caoutchouc diénique,
- 0,1 à 10 phr (parts en poids par rapport à 100 parts en poids de caoutchouc) d'au moins un accélérateur de type dithiophosphate et
- 1 à 80 phr d'au moins un polymère liquide.

2. Mélange de caoutchouc selon la revendication 1, **caractérisé en ce qu'**il contient 0,5 à 7 phr, de préférence 1 à 5 phr, d'au moins un accélérateur de type dithiophosphate.

3. Mélange de caoutchouc selon la revendication 1 ou 2, **caractérisé en ce que** l'accélérateur de type dithiophosphate est un alkyldithiophosphate d'un métal.

4. Mélange de caoutchouc selon la revendication 3, **caractérisé en ce que** l'accélérateur de type dithiophosphate est un alkyldithiophosphate de zinc.

5. Mélange de caoutchouc selon au moins une des revendications précédentes, **caractérisé en ce qu'**il contient 15 à 60 phr, d'au moins un polymère liquide.

6. Mélange de caoutchouc selon au moins une des revendications précédentes, **caractérisé en ce que** le polymère liquide comprend un diène en tant qu'au moins un monomère.

7. Mélange de caoutchouc selon la revendication 6, **caractérisé en ce que** le polymère liquide est un copolymère statistique de butadiène/styrène.

8. Mélange de caoutchouc selon au moins une des revendications précédentes, **caractérisé en ce qu'**il contient de 0,1 à 10 phr d'oxyde de zinc présentant une surface BET de 20 à 60 m²/g.

9. Mélange de caoutchouc selon au moins une des revendications précédentes, **caractérisé en ce qu'**il contient, outre l'au moins un accélérateur de type dithiophosphate, au moins un autre accélérateur de vulcanisation choisi dans le groupe constitué par les accélérateurs de type mercapto, les accélérateurs de type sulfénamide, les accélérateurs de type thiurame, les accélérateurs de type dithiocarbamate et les accélérateurs de type guanidine.

10. Mélange de caoutchouc selon la revendication 9, **caractérisé en ce qu'**il contient 0,5 à 7 phr de l'autre ou, respectivement, des autres accélérateur(s) de vulcanisation.

11. Pneumatique, notamment destiné à des véhicules, dont la bande de roulement est au moins partiellement basée sur un mélange de caoutchouc vulcanisé au soufre selon l'une des revendications 1 à 10.
